# EUROPÄISCHE PATENTSCHRIFT

(11) **EP 0 545 268 B1**
(45) Veröffentlichungstag und Bekanntmachung des Hinweises auf die Patenterteilung: **13.08.1997**
(21) Anmeldenummer: 92120137.2
(22) Anmeldetag: 26.11.1992
(51) Int. Cl.: G11B 5/845

(54) **Magnetischer Aufzeichnungsträger**
Magnetic recording medium
Milieu d'enregistrement magnétique

(30) Priorität: 06.12.1991 DE 4140261
(43) Veröffentlichungstag der Anmeldung: 09.06.1993
(73) Patentinhaber: EMTEC Magnetics GmbH, 67059 Ludwigshafen (DE)
(72) Erfinder: Richter, Hans Juergen, Dr., W-6731 St. Martin (DE); Hibst, Hartmut, Dr., W-6905 Schriesheim (DE); Jakusch, Helmut Dr., W-6710 Frankenthal (DE); Veitch, Ronald John, Dr., W-6701 Maxdorf (DE)
(74) Vertreter: Langfinger, Klaus-Dieter, Dr.

(56) Entgegenhaltungen:
- DE-B- 587 916
- US-A- 4 177 442
- PATENT ABSTRACTS OF JAPAN vol. 12, no. 192 (P-712)4. Juni 1988 & JP-A-62 298 018

## Beschreibung

Die Erfindung betrifft magnetische Aufzeichnungsträger, im wesentlichen bestehend aus einem bandförmigen polymeren Trägermaterial und mindestens einer darauf aufgebrachten Magnetschicht, welche in einer polymeren Bindemittelmatrix magnetische Teilchen enthält, deren Achsen leichter Magnetisierung mit der Vorzugsachse der Teilchen übereinstimmt und deren Achsen leichter Magnetisierung in der Magnetschicht weitgehend einheitlich orientiert sind.

Magnetische Aufzeichnungsträger, welche aus einem polymeren Trägermaterial und einer Magnetschicht, die in einer Bindemittelmatrix pulverförmige magnetische Teilchen enthält, sind seit langem bekannt. Ebenfalls bereits zu Beginn der Entwicklung derartiger Aufzeichnungsträger wurden hierfür magnetische Teilchen eingesetzt, welche eine Achse leichter Magnetisierung aufwiesen. Beim Aufbringen der Magnetschichten auf die Trägermaterialien wurde dann versucht, durch die Einwirkung äußerer Magnetfelder die in einer fließfähigen Bindemitteldispersion enthaltenen Teilchen so zu orientieren, daß nach der Verfestigung der Dispersionsschicht die Achsen leichter Magnetisierung der Teilchen in der Magnetschicht weitgehend einheitlich und entlang der vorgesehenen Aufzeichnungsrichtung angeordnet waren. Mit einer solchen Ausrichtung läßt sich bei der magnetischen Aufzeichnung eine Anhebung des Lesesignals erreichen. Verfahren zur Ausrichtung der magnetischen Teilchen sind vielfach beschrieben. Beispielhaft seien die französischen Patentschriften 792 275, 891 451 und 10 08 218 sowie die deutschen Patentschriften 587 916 und 616 886 genannt. Eine Orientierung in der Längsrichtung des magnetischen Aufzeichnungsträgers wurde jedoch nicht immer angestrebt, so z.B. britisches Patent 902 838, US-Patente 3 052 567 und 3 185 775 oder JP-A 298 018/1987.

Magnetische Aufzeichnungsträger mit einer besonders einheitlichen Ausrichtung der magnetisierbaren Teilchen sind insbesondere bei der Aufzeichnung von Informationen mit hoher Speicherdichte, wie sie beispielsweise bei den hohen Frequenzen moderner Videoaufzeichnungsverfahren zur Anwendung gelangen, erforderlich.

Bei solchen Videoanwendungen, die nach den Helical-Scan-Prinzip arbeiten, bewegt sich der Magnetkopf in einem Winkel von im allgemeinen 3 bis 10° relativ zur Bandlängsrichtung. Je nach Aufzeichnungssystem ist zudem der Spalt des Magnetkopfs noch zusätzlich um einen Winkel, der beispielsweise bei dem sogenannten Hi8-System 10⁰ betragen kann, gegen die Aufzeichnungsrichtung geneigt. Gegenüber der Bandlaufrichtung und damit gegenüber der magnetischen Vorzugsrichtung ergibt sich somit eine Neigung der magnetischen Aufzeichnungsspuren, welche beispielsweise etwa 15° betragen kann. Diese Abweichung von der magnetischen Vorzugsrichtung des magnetischen Aufzeichnungsträgers bedeutet eine Einbuße an für die Wiedergabe verfügbarer remanenter Magnetisierung.

Aufgabe der vorliegenden Erfindung war es daher, magnetische Aufzeichnungsträger bereitzustellen,welche den aufgezeigten Nachteil nicht aufweisen und bei denen die Projektion der magnetischen Vorzugsrichtung in die Bandebene mit der mittleren Aufzeichnungsrichtung übereinstimmt.

Es wurde nun gefunden, daß sich mit einem magnetischen Aufzeichnungsträger, im wesentlichen bestehend aus einem bandförmigen polymeren Trägermaterial und einer darauf aufgebrachten Magnetschicht, welche in einer polymeren Bindemittelmatrix magnetische Teilchen enthält, deren Achse leichter Magnetisierung mit der Vorzugsachse der Teilchen übereinstimmt und deren Achsen leichter Magnetisierung in der Magnetschicht weitgehend einheitlich orientiert sind, die Aufgabe lösen läßt, wenn gemäß Anspruch 1 oder 2 die Achsen leichter Magnetisierung der magnetischen Teilchen in der vorgesehenen Laufrichtung des magnetischen Aufzeichnungsträgers für die Aufzeichnung und Wiedergabe der Informationen einen Winkel von mehr als 5 und weniger als 90° zur Horizontalebene der Magnetschicht und gleichzeitig die Projektion der mittleren Vorzugsrichtung der Teilchen in die Magnetschichtebene mit der Laufrichtung des Magnetkopfes im Aufzeichnungs- und Wiedergabegerät übereinstimmt.

Mit einem derart ausgebildeten magnetischen Aufzeichnungsträger lassen sich Verbesserungen hinsichtlich des Signalpegels erzielen, bzw. gleichbleibend gute Aufzeichnungswerte mit dünneren Schichten oder mit geringerer Pigmentierung erreichen.

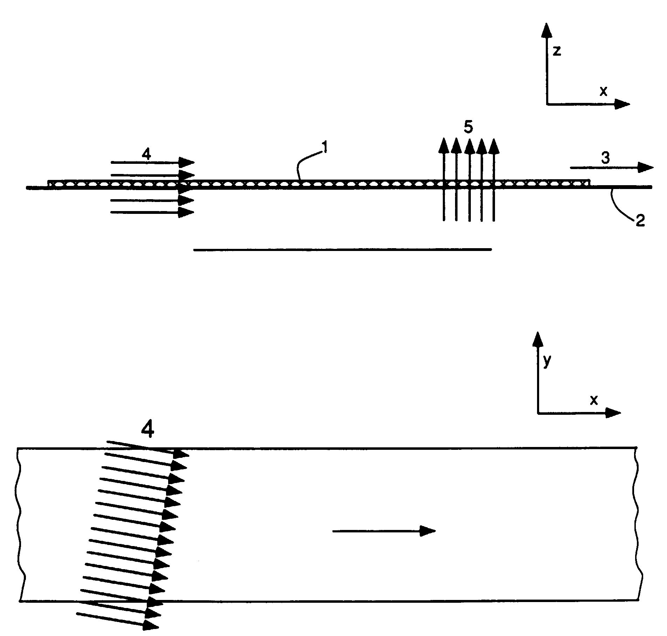

Die die erfindungsgemäßen magnetischen Aufzeichnungsträger auszeichnende Ausrichtung der Achsen leichter Magnetisierung der magnetischen Teilchen in der Magnetschicht läßt sich dadurch erreichen, daß bei der Beschichtung des Trägermaterials mit der Magnetdispersion, welche in einem gelösten Bindemitel die gleichmäßig verteilten magnetischen Teilchen enthält, im noch feuchten Zustand der Magnetschicht ein magnetisches Feld derart angelegt wird, daß zunächst eine Ausrichtung der Teilchen in der einen Richtung und dann eine Ausrichtung der Teilchen in der anderen Richtung erfolgt. Die Figur 1 zeigt in schematischer Darstellung diesen Vorgang, wobei die Magnetschicht 1 auf dem Substratmaterial 2 in der Richtung 3 durch zwei richtende Magnetfelder 4 und 5 geführt wird. Dabei hat es sich als vorteilhaft herausgestellt, zuerst die Teilchenausrichtung in der Bandebene in der erwünschten Kopflaufrichtung durchzuführen (s. Figur 1, Richtfeld 4) und danach die Ausrichtung der Magnetteilchen in dem senkrecht zur Bandebene vorgesehenen Winkel zu bewerkstelligen (s. Figur 1, Richtfeld 5)

In einer weiteren Ausgestaltung des erfindungsgemäßen Aufzeichnungsträgers weist dieser auf dem Trägermaterial zwei magnetisierbare Schichten auf, wobei die Achsen leichter Magnetisierung der magnetischen Teilchen in der Oberschicht in der vorgesehenen Laufrichtung des magnetischen Aufzeichnungsträgers für die Aufzeichnung und Wiedergabe von Informationen einen Winkel von mehr als 5 und weniger als 90° zur Horizontalebene der Magnetschicht und gleichzeitig die Projektion der mittleren Vorzugsrichtung der Teilchen in die Magnetschichtebene von mindestens einer der beiden Schichten mit der Laufrichtung des Kopfes übereinstimmt. Die Herstellung der so gerichteten Magnetschichten erfolgt in analoger Weise zu der Herstellung der einschichtigen Magnetschichten. Gegebenenfalls kann es dabei von Vorteil sein, den Auftrag der zweiten Magnetschicht auf die erste zwischen dem Richtfeld 4 und dem Richtfeld 5 (Figur 1) vorzunehmen.

Die Zusammensetzung und die Herstellung der für die Fertigung von magnetischen Aufzeichnungsträgern geeignete Dispersionen ist allgemeiner Stand der Technik. Die dabei eingesetzten magnetischen Materialien sind bekannt. Es handelt sich hierbei vorzugsweise um nadelförmige magnetische Eisenoxide unterschiedlicher Zusammensetzung, insbesondere unter Zusatz von Kobalt als Dotierungselement, um ferromagnetisches Chromdioxid mit üblichen Modifizierungselementen oder auch um kleinste nadelförmige ferromagnetische Metallteilchen, meist auf Eisen- und/oder Kobalt und/oder Nickelbasis.

Die organischen Bindemittel, die für die Herstellung der magnetisierbaren Schichten verwendet werden, sind Polyvinylformale, Polyurethanelastomere, Mischungen von Polyisocyanaten und höhermolekularen Polyhydroxylverbindungen und Vinylchlorid-Polymerisaten mit über 60 % an Vinylchlorid-Molekülbausteinen, z.B. Vinylchlorid-Copolymerisate mit Vinylestern von Monocarbonsäuren mit 2 bis 9 C-Atomen, Estern von aliphatischen Alkoholen mit 1 bis 9 C-Atomen und ethylenisch ungesättigten Carbonsäuren mit 3 bis 5 C-Atomen, wie die Ester der Acrylsäure, Methacrylsäure oder Maleinsäure, oder diesen Carbonsäuren selbst als Comonomere sowie hydroxylgruppenhaltige Vinylchlorid-Copolymerisate, die durch partielle Verseifung von Vinylchlorid-Vinylester-Copolymerisaten oder direkte Copolymerisaten von Vinylchlorid mit hydroxylhaltigen Monomeren, wie Allylalkohol oder 4-Hydroxybutyl- oder 2-Hydroxyethyl(meth)-acrylat hergestellt werden können. Ferner sind als Bindemittel geeignet Abmischungen der angegebenen Zusammmensetzung. Bevorzugste Bindemittel sind Polyvinylformal-Binder, Polyurethanelastomer-Abmischungen der genannten Art, vor allem mit Polyvinylformalen. Als Polyurethanelastomer-Binder werden handelsübliche elastomere Polyurethane aus Adipinsäure, 1,4-Butandiol und 4,4'-Diisocyanatodiphenylmethan bevorzugt angewandt. Als organisches Lösungsmittel eignen sich für die Herstellung der Dispersion die hierfür bekannten organischen Lösungsmittel, insbesondere aromatische Kohlenwasserstofe, wie Benzol, Toluol oder Xylol, Alkohole wie Propanol oder Butanol, Ketone wie Aceton, Methylethylketon, Ether wie Tetrahydrofuran oder Dioxan, sowie Gemische solcher Lösungsmittel.

Die in den Magnetschichten enthaltenen Dispergierhilfsmittel sind Kammblockcopolymere, aufgebaut aus einer Polyethylenimin-Kette als Grundgerüst und mit Seitenketten auf Polyester- und/oder Polyamidbasis, aliphatische Säuren mit 12 bis 18 Kohlenstoffatomen, deren Metallseifen, deren fluorierte Ester-Derivate sowie deren Amide oder auf Alkylenoxid-Alkylphosphorsäure-Ester, Lecithin oder quartäre Ammoniumsulfae von Trialkylpolyolefinoxid sowie höhere Alkohole mit 12 oder mehr Kohlenstoffatomen und ihre Schwefelsäureester. Die Menge in der magnetisierbaren Schicht beträgt 1 bis 10, vorzugsweise 3 bis 6 Gew.-%, bezogen auf die Menge an magnetisierbarem Material. Neben den bechriebenen Bestandteilen können noch anorganische Füllstoffe wie Ruß TiO₂, Zinnoxid und ähnliche in einer Konzentration von 1 bis 15, bevorzugt 2 bis 10 Gew.-%, bezogen auf die Menge an magnetisierbarem Material, eingesetzt werden. Außerdem ist es üblich, Lackadditive wie Tributoxyethylenphosphar oder langkettige Ester wie Stearate in einer Konzentration von 0,2 bis 2 %, bevorzugt 0,2 bis 1 Gew.-% zuzugeben.

## Patentansprüche

1. Magnetische Aufzeichnungsträger, im wesentlichen bestehend aus einem bandförmigen polymeren Trägermaterial und einer darauf aufgebrachten Magnetschicht, welche in einer polymeren Bindemittelmatrix magnetische Teilchen enthält, deren Achsen leichter Magnetisierung mit der Vorzugsachse der Teilchen übereinstimmt und deren Achsen leichter Magnetisierung in der Magnetschicht weitgehend einheitlich orientiert sind, dadurch gekennzeichnet, daß die Achsen leichter Magnetisierung der magnetischen Teilchen in der vorgesehenen Laufrichtung des magnetischen Aufzeichnungsträgers für die Aufzeichnung und Wiedergabe von Informationen einen Winkel von mehr als 5 und weniger als 90° zur Horizontalebene der Magnetschicht und gleichzeitig die Projektion der mittleren Vorzugsrichtung der Teilchen in die Magnetschichtebene mit der Laufrichtung des Magnetkopfes im Aufzeichnungs- und Wiedergabegerät übereinstimmt, wobei diese Projektion von der vorgesehenen Laufrichtung des magnetischen Aufzeichnungsträgers um einen Winkel von 3° bis 20° abweicht.

2. Magnetischer Aufzeichnungsträger, im wesentlichen bestehend aus einem bandförmigen polymeren Trägermaterial und zwei darauf aufgebrachten Magnetschichten, die in polymeren Bindemittelmatrices magnetische Teilchen enthalten, deren Achsen leichter Magnetisierung in der jeweiligen Magnetschicht weitgehend einheitlich orientiert sind, dadurch gekennzeichnet, daß die Achsen leichter Magnetisierung der magnetischen Teilchen in der Oberschicht in der vorgesehenen Laufrichtung des magnetischen Aufzeichnungsträgers für die Aufzeichnung und Wiedergabe von Informationen einen Winkel von mehr als 5 und weniger als 90° zur Horizontalebene der Magnetschicht und gleichzeitig die Projektion der mittleren Vorzugsrichtung der Teilchen in die Magnetschichtebene von mindestens einer den beiden Schichten mit der Laufrichtung des Kopfes übereinstimmt, wobei diese Projektion von der vorgesehenen Laufrichtung des magnetischen Aufzeichnungsträgers um einen Winkel von 3° bis 20° abweicht.

## Revendications

1. Support magnétique d'enregistrement constitué essentiellement d'un substrat polymère en forme de bande et d'une couche magnétique appliquée sur celui-ci qui contient dans une matrice liante polymère des particules magnétiques dont l'axe d'aimantation facile concorde avec l'axe principal des particules et dont les axes d'aimantation facile sont orientés sensiblement uniformément dans la couche magnétique, caractérisé par le fait que les axes d'aimantation facile des particules magnétiques dans la direction prévue de défilement du support magnétique d'enregistrement pour l'enregistrement et la lecture d'informations font un angle de plus de 5° et de moins de 90° avec le plan horizontal de la couche magnétique, et, en même temps, la projection de la direction principale moyenne des particules dans le plan de la couche magnétique concorde avec la direction de marche de la tête magnétique dans l'appareil d'enregistrement et de lecture, cette projection s'écartant d'un angle de 3° à 20° de la direction prévue de défilement du support magnétique d'enregistrement.

2. Support magnétique d'enregistrement constitué essentiellement d'un substrat polymère en forme de bande et de deux couches magnétiques appliquées sur celui-ci qui contiennent dans une matrice liante polymère des particules magnétiques dont les axes d'aimantation facile sont orientés sensiblement uniformément dans la couche magnétique correspondante, caractérisé par le fait que les axes d'aimantation facile des particules magnétiques de la couche supérieure dans la direction prévue de défilement du support magnétique d'enregistrement pour l'enregistrement et la lecture d'informations font un angle de plus de 5° et de moins de 90° avec le plan horizontal de la couche magnétique, et, en même temps, la projection de la direction principale moyenne des particules dans le plan d'au moins une des deux couches magnétiques concorde avec la direction de marche de la tête, cette projection s'écartant d'un angle de 3° à 20° de la direction prévue de défilement du support magnétique d'enregistrement.

## Claims

1. A magnetic recording medium, consisting essentially of a tape-like polymeric substrate and a magnetic layer which is applied thereon and contains, in a polymeric binder matrix, magnetic particles whose axes of easy magnetization coincide with the preferred axis of the particles and whose axes of easy magnetization in the magnetic layer are substantially uniformly oriented, wherein the axes of easy magnetization of the magnetic particles in the intended running direction of the magnetic recording medium for the recording and playback of information make an angle of more than 5 and less than 90° with the horizontal plane of the magnetic layer and at the same time the projection of the average preferred direction of the particles into the plane of the magnetic layer coincides with the running direction of the head in the recording and playback apparatus, this projection deviating from the intended running direction of the magnetic recording medium by an angle of from 3° to 20°.

2. A magnetic recording medium, consisting essentially of a tape-like polymeric substrate and two magnetic layers which are applied thereon and contain, in polymeric binder matrices, magnetic particles whose axes of easy magnetization in the particular magnetic layer are substantially uniformly oriented, wherein the axes of easy magnetization of the magnetic particles in the upper layer in the intended running direction of the magnetic recording medium for the recording and playback of information make an angle of more than 5 and less than 90° with the horizontal plane of the magnetic layer and at the same time the projection of the average preferred direction of the particles into the plane of at least one of the two magnetic layers coincides with the running direction of the head, this projection deviating from the intended running direction of the magnetic recording medium by an angle of from 3° to 20°.
